Europäisches Patentamt

(19) European Patent Office

Office européen des brevets

(11) Veröffentlichungsnummer: **0 239 870**
**B1**

(12) **EUROPÄISCHE PATENTSCHRIFT**

(45) Veröffentlichungstag der Patentschrift:
26.07.89

(21) Anmeldenummer: 87103913.7

(22) Anmeldetag: 17.03.87

(51) Int. Cl.⁴: **C08G 18/10, C08G 18/32,**
**C08G 18/76, C09J 3/14,**
**C09D 5/04**

(54) Verfahren zur Herstellung von thixotropen Bindemitteln, die nach diesem Verfahren erhältlichen Bindemittel und ihre Verwendung zur Herstellung von Beschichtungs- und Abdichtungsmitteln.

(30) Priorität: 29.03.86 DE 3610729

(43) Veröffentlichungstag der Anmeldung
07.10.87 Patentblatt 87/41

(45) Bekanntmachung des Hinweises auf die Patenterteilung:
26.07.89 Patentblatt 89/30

(84) Benannte Vertragsstaaten:
AT BE CH DE FR GB IT LI NL SE

(56) Entgegenhaltungen:
EP-A- 0 022 497
EP-A- 0 052 301
DE-A- 2 359 929
FR-A- 2 019 307

(73) Patentinhaber: BAYER AG,
D-5090 Leverkusen 1 Bayerwerk(DE)

(72) Erfinder: Wellner, Wolfgang, Dr., Bachstrasse 1,
D-5060 Bergisch Gladbach 2(DE)
Erfinder: Gruber, Hermann, Dr., Paul-Klee-Strasse 87,
D-5090 Leverkusen(DE)
Erfinder: Fehlbier, Alois, Dipl.-Ing., Heddinghofener
Strasse 56, D-5093 Burscheid(DE)

**Beschreibung**

Die Erfindung betrifft ein neues Verfahren zur Herstellung von neuartigen, lufttrocknenden, freie Isocyanatgruppen aufweisenden Bindemitteln mit thixotropen Eigenschaften durch Umsetzung von ausgewählten, freie Isocyanatgruppen aufweisenden Prepolymeren oder Semiprepolymeren mit ausgewählten aromatischen Diaminen, die nach diesen Verfahren erhältlichen, thixotropen Bindemittel und ihre Verwendung zur Herstellung von lufttrocknenden, d.h. unter dem Einfluß von Luftfeuchtigkeit aushärtbaren Beschichtungs- und Abdichtungsmitteln.

Unter dem Einfluß von Luftfeuchtigkeit aushärtbare, freie Isocyanatgruppen aufweisende Bindemittel auf Polyurethanbasis lassen sich leicht verarbeiten und finden daher vielfaltige Verwendung, insbesondere zur Herstellung von Beschichtungs- und Abdichtungsmitteln.

Für viele Anwendungsgebiete, beispielsweise für die Herstellung von dicken Schichten wäre ein thixotropes Fließverhalten derartiger Beschichtungs- bzw. Abdichtungsmittel erwünscht.

Es war daher die der Erfindung zugrunde liegende Aufgabe, lufttrocknende, freie Isocyanatgruppen aufweisende Bindemittel mit thixotropen Eigenschaften zur Verfügung zu stellen.

Diese Aufgabe konnte überraschenderweise mit dem nachstehend näher beschriebenen erfindungsgemäßen Verfahren gelöst werden. Der Erfindung liegt die überraschende Beobachtung zugrunde, daß Harnstoffgruppen aufweisende Umsetzungsprodukte von (i) NCO-Prepolymeren oder -Semi-prepolymeren auf Basis von Polyisocyanatgemischen der Diphenylmethanreihe mit einem erhöhten Gehalt an 2,4'-Diisocyanatodiphenylmethan mit (ii) bestimmten, alkylsubstituierten aromatischen Diaminen zur Thixotropierung der gennanten Bindemittel geeignet sind, während analoge Umsetzungsprodukte auf Basis von klassischen Diisocyanaten wie beispielsweise Toluylendiisocyanat hierzu nicht geeignet sind. Dieser Befund ist überraschend, da beispielsweise aus DE-AS 1,805,693 oder aus DE-AS 2,360,019 bekannt ist, daß Umsetzungsprodukte von Toluylendiisocyanat mit Mono-und/oder Polyaminen sehr gute Thixotropierungsmittel für andere Bindemittel, beispielsweise solchen auf Alkydharz-Basis, darstellen.

Gegenstand der Erfindung ist ein Verfahren zur Herstellung von lufttrocknenden, freie Isocyanatgruppen aufweisenden Bindemitteln mit thixotropen Eigenschaften, dadurch gekennzeichnet, daß man entweder

a1) freie Isocyanatgruppen aufweisende Prepolymere oder Semiprepolymere mit einem NCO-Gehalt von 0,5 bis 20 Gew.-% auf Basis von (i) Polyisocyanatgemischen der Diphenylmethanreihe mit einem Gehalt an 2,4'-Diisocyanatodiphenylmethan von mindestens 20 Gew.-% und (ii) organischen Polyhydroxylverbindungen eines (mittleren) Molekulargewichts von 500 bis 7000 und einer (mittleren) Hydroxylfunktionalität von 1,5 bis 6 oder

a2) Gemische aus freie Isocyanatgruppen aufweisenden Prepolymeren oder Semiprepolymeren eines NCO-Gehalts von 0,5 bis 20 Gew.-% auf Basis von (i) beliebigen organischen Polyisocanaten eines unter 300 liegenden (mittleren) Molekulargewichts mit Ausnahme von Polyisocyanaten der zur Herstellung der Komponente a1) eingesetzten Art und (ii) unterschiedlichen Mengen an organischen Polyhydroxylverbindungen eines (mittleren) Molekulargewichts von 500 bis 7000 und einer (mittleren) Hydroxylfunktionalität von 1,5 bis 6 mit mindestens 3 Gew.-%, bezogen auf das Gesamtgewicht der Komponente a2), an Prepolymeren oder Semiprepolymeren der unter a1) genannten Art mit

b) aromatischen Diaminen, die in o-Stellung zu jeder Aminogruppe jeweils mindestens einen Alkylsubstituenten aufweisen

unter Einhaltung eines NCO/NH₂-Äquivalentverhältnisses, bezogen auf die Isocyanatgruppen der reinen Komponente a1) oder der in der Komponente a2) vorliegenden Komponente a1) und die Aminogruppen der Komponente b) von 0,5:1 bis 50:1 zur Reaktion bringt, mit der Maßgabe, daß das Äquivalentverhältnis von Isocyanatgruppen zu Aminogruppen, bezogen auf alle vorliegenden Isocyanatgruppen der Komponenten a1) oder a2) und die Aminogruppen der Komponente b) bei mindestens 10:1 liegt.

Gegenstand der Erfindung sind auch die nach diesem Verfahren erhältlichen, freie Isocyanatgruppen aufweisende Bindemittel mit thixotropen Eigenschaften.

Gegenstand der Erfindung ist schließlich auch die Verwendung der nach diesem Verfahren erhältlichen Bindemittel mit thixotropen Eigenschaften zur Herstellung von unter dem Einfluß von Luftfeuchtigkeit aushärtenden Beschichtungs- und Abdichtungsmitteln.

Geeignete Polyisocyanate zur Herstellung der beim erfindungsgemäßen Verfahren einzusetzenden Komponente a1) sind beliebige Polyisocyanatgemische der Diphenylmethanreihe mit einem Gehalt an 2,4'-Diisocyanatodiphenylmethan von mindestens 20 Gew.-%. Besonders bevorzugt sind Gemische aus 2,4'-Diisocyanatodiphenylmethan und 4,4'-Diisocyanatodiphenylmethan und gegebenenfalls untergeordneten Mengen an 2,2'-Diisocyanatdiphenylmethan. Diese bevorzugten Gemische bestehen aus 20 bis 80, vorzugsweise 40 bis 60 Gew.-% an 2,4'-Diisocyanatodiphenylmethan, 20 bis 80, vorzugsweise 40 bis 60, an 4,4'-Diisocyanatodiphenylmethan und bis zu 5 Gew.-% aus 2,2'-Diisocyanatodiphenylmethan, wobie sich die genannten Prozentsätze zu 100 ergänzen und jeweils auf das Gesamtgemisch beziehen. Besonders bevorzugt werden die entsprechenden, 2,2'-Isomeren-freien Gemische eingesetzt. Es ist jedoch auch möglich, allerdings weniger bevorzugt, solche Polyisocyanatgemische der Diphenylmethanreihe mit einem Gehalt an 2,4'-Diisocyanatodiphenylmethan von mindestens 20 Gew.-% einzusetzen, die neben den genannten Diisocyanaten bis zu 50 Gew.-%, vorzugsweise bis zu 20 Gew.-% an tri- und höherfunktionellen Polyisocyanaten der Diphenylmethanreihe enthalten. Derartige höherfunktionelle Homologe entstehen neben den genannten Diisocyanaten bei der bekannten Phosgenierung von Anilin/Formaldehyd-Kondensaten.

Zur Herstellung der NCO-Prepolymere bzw. -Semiprepolymere, die in der gegebenenfalls beim erfindungsgemäßen Verfahren einzusetzenden Komponente a2) im Gemisch mit NCO-Prepolymeren oder -Semiprepolymeren a1) vorliegen, eignen sich beliebige aliphatische, cycloaliphatische, araliphatische, aromatische oder heterocyclische Polyisocyanate, wie sie z.B. von W. Siefken in Justus Liebigs Annalen der Chemie, 562, Seite 75-136, beschrieben werden, beispielsweise solche der Formel

$Q(NCO)_n$

in der

n 2 bis 4, vorzugsweise 2, und

Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen

bedeuten.

Beispiele für derartige Polyisocyanate sind Ethylendiisocyanat, Tetramethylendiisocyanat, Hexamethylendiisocyanat, Dodecamethylendiisocyanat, 1,3-Diisocyanatocyclobutan, 1-Isocyanato-3,3,5-trimethyl-5-isocyanato-methyl-cyclohexan (IPDI), 4,4'-Diisocyanato-dicyclohexylmethan, 2,4-Diisocyanatotoluol, 2,6-Diisocyanatotoluol, sowie beliebige Gemische der beiden letztgenannten Isomeren oder 1,5-Diisocyanato-naphthalin. Beliebige Gemische der beispielhaft genannten Polyisocyanate können selbstverständlich ebenfalls eingesetzt werden.

Zur Herstellung der NCO-Prepolymeren bzw. -Semiprepolymeren geeignete Polyhydroxylverbindungen sind solche der aus der Polyurethanchemie an sich bekannten Art einer (mittleren) Hydroxylfunktionalität von 1,5 bis 6, vorzugsweise von 2 bis 4 und eines aus der Funktionalität und dem Hydroxylgruppengehalt errechenbaren (mittleren) Molekulargewichts von 500 bis 7000, vorzugsweise 1000 bis 4000. Diese Angaben bezüglich der Hydroxylfunktionalität und des Molekulargewichts beziehen sich im Falle der Verwendung von Gemischen von verschiedenen Polyhydroxylverbindungen auf die statistischen Mittelwerte dieser Gemische, Hieraus folgt, daß einzelne Komponenten dieser Gemische auch außerhalb der genannten Bereiche liegende Hydroxylfunktionalität und insbesondere ein außerhalb dieser Bereiche liegendes Molekulargewicht aufweisen können.

Geeignete Polyhydroxylverbindungen sind die aus der Polyurethanchemie an sich bekannten Polyesterpolyole, die aus der Polyurethanchemie an sich bekannten Polyetherpolyole und gegebenenfalls die aus der Polyurethanchemie an sich bekannten einfachen, niedermolekularen Polyhydroxylverbindungen, die in geringen Anteilen in der Polyhydroxylkomponente vorliegen können. Besonders bevorzugt werden die aus der Polyurethanchemie bekannten Polyetherpolyole eingesetzt.

Die in Frage kommenden Polyesterpolyole sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren.

Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:
Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid. Als mehrwertige Alkohole kommen z.B. Ethylenglykol, Propylenglykol(1,2) und -(1,3), Butylenglykol-(1,4) und -(2,3), Hexandiol-(1,6), Octandiol-(1,8), Neopentylglykol, 1,4-Bishydroxymethylcyclohexan, 2-Methyl-1,3-propandiol, Glycerin, Trimethylolpropan, Hexantriol-(1,2,6), Butantriol-(1,2,4), Trimethylolethan, Diethylenglykol, Triethylenglykol, Tetraethylenglykol, Dipropylenglykol, sowie Dibutylenglykol in Frage. Die Polyesterpolyole weisen im allgemeinen Säurezahlen von maximal 5 und Hydroxylzahlen von 40 bis 112 auf.

Als Polyetherpolyole sind beispielsweise solche geeignet, die durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$ oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen erhalten werden können. Geeignete Startermoleküle sind beispielsweise Wasser oder einfache, mehrwertige Alkohole, der bezüglich der Herstellung der Polyesterpolyole bereits oben beispielhaft genannten Art.

Als gegebenenfalls in geringen Mengen mitzuverwendende einfache, d.h. niedermolekulare Polyole kommen beispielsweise die oben bezüglich der Herstellung der Polyesterpolyole beispielshaft genannten, niedermolekularen Polyhydroxylverbindungen in Betracht. Auch einwertige Alkohole wie z.B. Ethanol, n-Octanol oder Stearylalkohol können gegebenenfalls entsprechend den gemachten Angaben bezüglich der mittleren Hydroxyfunktionalität mitverwendet werden.

Sowohl bei der Herstellung der erfindungswesentlichen Ausgangskomponente a1) als auch bei der Herstellung der in der Komponente a2) gegebenenfalls vorliegenden NCO-Prepolymeren oder Semiprepolymeren werden die beispielhaft genannten Ausgangspolyisocyanate und Polyhydroxylverbindungen in solchen Mengen miteinander zur Reaktion gebracht, daß die resultierenden Prepolymeren bzw. Semiprepolymeren einen NCO-Gehalt von 0,5 bis 20, vorzugsweise 5 bis 20 Gew.-% aufweisen. Diese Umsetzung erfolgt in an sich bekannter Weise, im allgemeinen innerhalb eines Temperaturbereichs von 0 bis 100°C. Es resultieren hierbei freie Isocyanatgruppen und Urethangruppen aufweisende Umsetzungsprodukte, die je nach zum Einsatz gelangendem Polyisocyanat-Überschuß im Gemisch mit nicht umgesetztem Ausgangspolyisocyanat (Semiprepolymere) vorliegen können. Die Herstellung der beim erfindungsgemäßen Verfahren gegebenenfalls einzusetzenden Ausgangskomponente a2) kann hierbei sowohl in einem "Eintopf-Verfahren" als auch unter separater Herstellung der beiden Einzelkomponenten und anschließender Vermischung erfolgen. Beim "Eintopf-Verfahren" werden die beispielhaft genannten organischen Polyhydroxylverbindungen mit einem Überschuß eines Gemischs aus (i) Polyisocyanatgemischen der Diphenylmethanreihe mit einem Gehalt an 2,4'-Diisocyanatodiphenylmethan von mindestens 20 Gew.-% und (ii) anderen Polyisocyanaten bzw. Polyisocyanatgemischen der oben beispielhaft genannten Art zur Reaktion gebracht. In beiden Fällen der Herstellung der Komponente a2) wird die Menge der NCO-Prepolymeren bzw. -Semiprepolymeren auf Basis von Polyisocyanatgemischen der Diphenylmethanreihe mit einem Gehalt an 2,4'-Diisocyanatodiphenylmethan von mindestens 20 Gew.-% bzw. die Menge dieser Polyisocyanatgemische (Eintopf-Verfahren) so bemessen, daß in der letztendlich resultierenden Komponente a2) mindestens 3 Gew.-%, vorzugsweise mindestens 10 Gew.-% an erfindungswesentlichen Prepolymeren bzw. Semiprepolymeren a1) vorliegen. Da beim erfindungsgemäßen Verfahren auch reine derartige Prepolymere bzw. Semiprepolymere eingesetzt werden können (= Komponente a1), existiert bezüglich des Gehalts der Komponente a2) an derartigen Prepolymeren bzw. Semiprepolymeren keine Obergrenze. Bevorzugt ist allerdings bei Verwendung von Ausgangskomponenten a2) anstelle von Ausgangskomponenten a1) die Verwendung von solchen Gemischen, die bis zu 20 Gew.-% an erfindungswesentlichen Prepolymeren bzw. Semiprepolymeren auf Basis von 2,4'-Diisocyanatodiphenylmethan-haltigem Polyisocyanatgemisch der Diphenylmethanreihe aufweisen. Im übrigen kann die Polyhydroxylkomponente, die zur Herstellung der erfindungswesentlichen Prepolymere bzw. Semiprepolymere a1) eingesetzt wird sowohl der Polyhydroxylkomponente der anderen Prepolymere bzw. Semiprepolymere entsprechen als auch von dieser verschieden sein.

Bei der beim erfindungsgemäßen Verfahren einzusetzenden Ausgangskomponente b) handelt es sich um beliebige aromatische Diamine, die ortho-ständig zu jeder Aminogruppe mindestens jeweils einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 4, vorzugsweise 1 bis 3 Kohlenstoffatomen, aufweisen, besonders bevorzugt um solche, die in jeweils mindestens einer ortho-Stellung zu den Aminogruppen einen Ethyl-, n-Propyl- und/oder iso-Propyl-Substituenten und gegebenenfalls in weiteren ortho-Stellungen zu den Aminogruppen Methylsubstituenten aufweisen.

Beispiele für solche Diamine sind 2,4-Diaminomesitylen, 1,3,5-Triethyl-2,4-diaminobezol, 1,3,5-Triisopropyl-2,4-diaminobenzol, 1-Methyl-3,5-diethyl-2,4-diaminobenzol, 1-Methyl-3,5-diethyl-2,6-diaminobenzol, beliebige technische Gemische der letztgenannten beiden Diamine, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan, 1-t-Butyl-3,5-dimethyl-2,4-diaminobenzol, 1-t-Butyl-3,5-dimethyl-2,6-diaminobenzol oder beliebige technische Gemische der letztgenannten beiden Diamine. Besonders bevorzugt werden 1-Methyl-3,5-diethyl-2,4-diaminobenzol oder dessen technische Gemische mit 1-Methyl-3,5-diethyl-2,6-diaminobenzol, die im allgemeinen bis zu 35 Gew.-%, bezogen auf Gesamtgemisch des 2,6-Isomeren, enthalten als erfindungsgemäße Ausgangskomponente b) verwendet.

Bei der Durchführung des erfindungsgemäßen Verfahrens wird die Ausgangskomponente a1) oder die Ausgangskomponente a2) mit der Komponente b) zur Reaktion gebracht. Hierbei werden die Mengenverhältnisse der Reaktionspartner so gewählt, daß das Äquivalentverhältnis von (i) Isocyanatgruppen der erfindungswesentlichen Prepolymeren bzw. Semiprepolymeren a1) auf Basis von Polyisocyanatgemischen der Diphenylmethanreihe mit einem Gehalt an mindestens 20 Gew.-% an 2,4'-Diisocyanatodiphenylmethan zu (ii) Aminogruppen der Komponente b) bei 0,5:1 bis 50:1, vorzugswesie bei 1:1 bis 20:1 liegt, mit der Maßgabe, daß das Äquivalentverhältnis, bezogen auf alle Isocyanatgruppen einerseits und Aminogruppen der Komponente b) andererseits bei mindestens 10:1 liegt. Dies bedeutet, daß bei ausschließlicher Verwendung von erfindungswesentlichen Prepolymeren bzw. Semiprepolymeren a1) das genannte Äquivalentverhältnis mindestens bei 10:1 liegen muß. Bei Verwendung von Gemischen a2) von erfindungswesentlichen Prepolymeren bzw. Semiprepolymeren a1) mit anderen Prepolymeren bzw. Semiprepolymeren muß ebenfalls ein Äquivalentverhältnis, bezogen auf alle Isocyanatgruppen, von mindestens 10:1 gewählt werden, jedoch kann in diesem Falle das Äquivalentverhältnis, bezogen auf die erfin-

dungswesentliche Prepolymer- bzw. Semiprepolymer-Komponente auch weit tiefer, im Extremfall bei 0,5:1 liegen. Der Grad der Thixotropierung hängt vor allem vom Gehalt der Bindemittel an Harnstoffgruppen aufweisenden Umsetzungsprodukten aus erfindungswesentlicher Komponente a1) (die in der Komponente a2) als Abmisohkomponente vorliegen kann) mit der Komponente b). Demzufolge wird man die Menge der einzelnen Ausgangsmaterialien, die zur Erzielung des jeweils angestrebten Thixotropierungseffekts erforderlich ist, durch einige wenige nicht-erfinderische Vorversuche ermitteln.

Die Durchführung des erfindungsgemäßen Verfahrens erfolgt vorzugsweise bei Raumtemperatur, in Abwesenheit oder in Gegenwart von geeigneten inerten, vorzugsweise unpolaren oder nur schwach polaren Lacklösungsmitteln, wie beispielsweise Benzin, Xylol, Toluol oder Gemische derartiger Lösungsmittel.

Vorzugsweise erfolgt die Umsetzung jedoch in Abwesenheit derartiger Lösungsmittel. Die Verwendung von an sich bekannten, die Isocyanatadd* itionsreaktion beschleunigenden Katalysatoren ist prinzipiell möglich. Geeignete Katalysatoren sind beispielsweise Zinnverbindungen; z.B. Dibutylzinndilaurat, Zinn(II)-octoat.

Weitere Katalysatoren sind in "Kunststoff-Handbuch", Band VII, herausgegeben von Becker und Braun, Carl-Hanser-Verlag, München 1983, auf den Seiten 92-98 beschrieben. Die Katalysatoren werden, falls überhaupt, in einer Menge von 0,001 bis 10 Gew.-%, vorzugsweise von 0,002 bis 0,1 Gew.-%, bezogen auf die Gesamtmenge der Reaktionspartner eingesetzt.

Falls beim erfindungsgemäßen Verfahren Gemische a2) als Ausgangsmaterialien eingesetzt werden und neben den erfindungswesentlichen Prepolymeren bzw. Semiprepolymeren solche auf Basis von Polyisocyanaten mit aliphatisch oder cycloaliphatisch gebundenen Isocyanatgruppen vorliegen, kann wegen der weit höheren Reaktivität der aromatisch gebundenen Isocyanatgruppen davon ausgegangen werden, daß die Komponente b) in erster Linie, d.h. weitgehend selektiv mit den aromatisch gebundenen Isocyanatgruppen abreagiert, es sei denn, es wird, bezogen auf diese Isocyanatgruppen ein Aminüberschuß eingesetzt. Es ist jedoch auch möglich, beim erfindungsgemäßen Verfahren solche Gemische a2) einzusetzen, deren Isocyanatgruppen eine ähnliche Reaktivität gegenüber Aminogruppen aufweisen, d.h. beispielsweise Gemische aus erfindungswesentlichen Prepolymeren oder Semiprepolymeren mit solchen auf Basis von 2,4-Diisocyanatotoluol. In einem solchen Falle reagieren die Aminogruppen der Komponente b) vermutlich sowohl mit den Isocyanatgruppen der erfindungswesentlichen Prepolymeren bzw. Semiprepolymeren als auch mit den Isocyanatgruppen der nicht erfindungswesentlichen Prepolymeren bzw. Semiprepolymeren ab. Überraschenderweise wird jedoch auch in diesem Falle der erfindungsgemäße Thixotropierungseffekt beobachtet, während bei alleiniger Verwendung von nicht erfindungswesentlichen Prepolymeren bzw. Semiprepolymeren, beispielsweise solchen auf Basis von 2,4-Diisocyanatotoluol dieser Effekt nicht beobachtet werden kann.

Die erfindungswesentlichen Verfahrensprodukte stellen, insbesondere bei Verwendung der bevorzugten Ausgangsmaterialien im allgemeinen bei Raumtemperatur flüssige Produkte mit thixotropen Eigenschaften dar. Sie eignen sich als Bindemittel zur Herstellung gebrauchsfertiger Beschichtungs- und Abdichtungsmittel, jedoch auch als Thixotropieträger für andere Bindemittel, insbesondere andere, freie Isocyanatgruppen aufweisende Prepolymere. So können beispielsweise die erfindungsgemäßen Verfahrensprodukte auf Basis der Ausgangskomponenten a1) und b) nach ihrer Herstellung mit anderen, freie Isocyanatgruppen aufweisenden Prepolymeren, wie sie beispielsweise in der Komponente a2) als Abmischkomponente vorliegen können, abgemischt werden, um dem so erhaltenen Gemisch thixotrope Eigenschaften zu verleihen.

Zur Herstellung von gebrauchsfertigen Beschichtungs- und Abdichtungsmitteln können den erfindungsgemäßen Verfahrensprodukten die üblichen Hilfs- und Zusatzmittel wie z.B. Weichmacher, Streckmittel, Lösemittel, Füllstoffe, Pigmente, Alterungsschutzmittel sowie spezielle Zusatzstoffe zur Erzielung bestimmter Eigenschaften, wie beispielsweise Silane zur Verbesserung der Hafteigenschaften, zugesetzt werden. Für die Brandschutz-Ausrüstung können flammhemmende Zusatzstoffe, wie z.B. Aluminiumoxidhydrat, Antimontrioxid oder halogenhaltige Zusatzstoffe, z.B. PVC-Pulver mitverwendet werden; zur Erhöhung der elektrischen Leitfähigkeit können den Massen beispielsweise Graphit oder Metallpulver einverleibt werden. Auch ein Zusatz von Gummimehl oder Hohlkugeln ist möglich. Auf diese Weise werden gebrauchsfertige, lufttrocknende Beschichtungs- und Abdichtungsmittel mit thixotropen Eigenschaften erhalten.

Die nachfolgenden Beispiele dienen zur näheren Erläuterung der Erfindung. Alle Prozentangaben beziehen sich auf Gewichtsprozente.

<u>Beispiel 1</u>

In vier Parallelversuchen (Versuche a) bis d)) wird jeweils ein Polyetherpolyol des mittleren Molekulargewichts 4800 und der OH-Zahl 35, hergestellt durch Propoxylierung von Trimethylolpropan, mit den in nachstehender Tabelle genannten Diisocyanaten zu den entsprechenden Semiprepolymeren mit einem NCO-Gehalt von 9 % umgesetzt. Die Umsetzung erfolgte bei 80°C während einer Reaktionszeit von 24 Stunden. Die in der Tabelle verwendeten Abkürzungen haben folgende Bedeutung:

2,4' MDI = 2,4'-Diisocyanatodiphenylmethan
4,4' MDI = 4,4'-Diisocyanatodiphenylmethan

2,4 TDI = 2,4-Diisocyanatotoluol
IPDI = 1-Isocyanato-3,3,5-trimethyl-5-isocyanatomethyl-cyclohexan

Tabelle

|  | a | b | c | d |
|---|---|---|---|---|
| Polyol | 259 g | 259 g | 259 g | 259 g |
| 2,4' MDI 50% 4,4' MDI 50% | 113 g | – | – | – |
| 4,4' MDI | – | 113 g | – | – |
| 2,4 TDI 100% | – | – | 78 g | – |
| IPDI | – | – | – | 100 g |

Anschließend werden jeweils 100 g der so hergestellten Semiprepolymeren mit 0,7 g 1-Methyl-3,5-diethyl-2,6- diaminobenzol vermischt (NCO/NH-Äquivalentverhältnis = 15:1) und während 1 h bei Raumtemperatur gelagert. Im Anschluß hieran wird das Fließverhalten der einzelnen Proben beurteilt.

Hierzu werden jeweils zwei Parallelproben in einem Haake Rotationsviskosimeter bei einer Rührgeschwindigkeit von 5 sec⁻¹ und 1000 sec⁻¹ bei 23°C gerührt und die Viskositäten jeweils bei dieser Temperatur und diesen Rührgeschwindigkeiten bestimmt. Die Ergebnisse sind in der nachfolgenden Tabelle zusammengefaßt. Maßgebend für das Thixotropieverhalten ist der aus den einzelnen Viskositäten gebildete Quotient.

|  | a | b | c | d |
|---|---|---|---|---|
| Viskosität (mPas) 5 sec⁻¹ | 30000 | 32000 | 9000 | 2800 |
| Viskosität (mPas) 1000 sec⁻¹ | 5000 | 8000 | 3000 | 2500 |
| Quotient | 6 | 4 | 3 | 1 |

Beispiel 2

100 g des Semiprepolymeren gemäß Beispiel 1d) werden mit 7 g des Semiprepolymeren gemäß Beispiel 1a) bei Raumtemperatur vermischt. Nach Zusatz von 1,0 g des in Beispiel 1 genannten Diamins (NCO/NH-Verhältnis bezogen auf die Isocyanatgruppen des Semiprepolymeren 1a) = 1:1, bezogen auf die Gesamtmenge der Isocyanatgruppen = 20:1) und anschließende Lagerung während 1 h bei Raumtemperatur ist ein thixotropes Bindemittel mit folgendem Fließverhalten entstanden:
Viskosität (23°C) bei 5 sec⁻¹: 75000 mPa.s
Viskosität (23°C) bei 1000 sec⁻¹: 2000 mPa.s
Quotient: 37,5.

**Patentansprüche**

1. Verfahren zur Herstellung von lufttrocknenden, freie Isocyanatgruppen aufweisenden Bindemitteln mit thixotropen Eigenschaften, dadurch gekennzeichnet, daß man entweder
a1) freie Isocyanatgruppen aufweisende Prepolymere oder Semiprepolymere mit einem NCO-Gehalt von 0,5 bis 20 Gew.-% auf Basis von (i) Polyisocyanatgemischen der Diphenylmethanreihe mit einem Gehalt an 2,4'-Diisocyanatodiphenylmethan von mindestens 20 Gew.-% und (ii) organischen Polyhydroxylverbindungen eines (mittleren) Molekulargewichts von 500 bis 7000 und einer (mittleren) Hydroxyfunktionalität von 1,5 bis 6
oder
a2) Gemische aus freie Isocyanatgruppen aufweisenden Prepolymeren oder Semiprepolymeren eines NCO-Gehalts von 0,5 bis 20 Gew.-% auf Basis von (i) beliebigen organischen Polyisocanaten eines unter 300 liegenden (mittleren) Molekulargewichts mit Ausnahme von Polyisocyanaten der zur Herstellung der Komponente a1) eingesetzten Art und (ii) unterschüssigen Mengen an organischen Polyhydroxylverbindungen eines (mittleren) Molekulargewichts von 500 bis 7000 und einer (mittleren) Hydroxylfunktionalität von 1,5 bis 6 mit mindestens 3 Gew.-%, bezogen auf das Gesamtgewicht der Komponente a2), an Prepolymeren oder Semiprepolymeren der unter a1) genannten Art
mit
b) aromatischen Diaminen, die in o-Stellung zu jeder Aminogruppe jeweils mindestens einen Alkylsubstituenten aufweisen

unter Einhaltung eines NCO/$NH_2$-Äquivalentverhältnisses, bezogen auf die Isocyanatgruppen der reinen Komponente a1) oder der in der Komponente a2) vorliegenden Komponente a1) und die Aminogruppen der Komponente b) von 0,5:1 bis 50:1 zur Reaktion bringt, mit der Maßgabe, daß das Äquivalentverhältnis von Isocyanatgruppen zu Aminogruppen, bezogen auf alle vorliegenden Isocyanatgruppen der Komponenten a1) oder a2) und die Aminogruppen der Komponente b) bei mindestens 10:1 liegt.

2. Verfahren gemäß Anspruch 1, dadurch gekennzeichnet, daß man als organische Polyhydroxylverbindungen zur Herstellung der Prepolymeren oder Semiprepolymeren jeweils gleiche oder verschiedene Polyetherpolyole einer (mittleren) Hydroxylfunktionalität von 2 bis 4 verwendet.

3. Gemäß Anspruch 1 und 2 erhältliche, freie Isocyanatgruppen aufweisende Bindemittel mit thixotropen Eigenschaften.

4. Verwendung der gemäß Anspruch 1 und 2 erhältlichen Bindemittel mit thixotropen Eigenschaften zur Herstellung von unter dem Einfluß von Luftfeuchtigkeit aushärtenden Beschichtungs- und Abdichtungsmitteln.

## Claims

1. A process for the production of air-drying, thixotropic binders containing free isocyanate groups, characterized in that either

a1) prepolymers or semiprepolymers containing free isocyanate groups (NCO content 0.5 to 20% by weight) based on (i) polyisocyanate mixtures of the diphenylmethane series containing at least 20% by weight 2,4'-diisocyanatodiphenylmethane and (ii) organic polyhydroxyl compounds having an (average) hydroxyl functionality of from 500 to 7000 and an (average) hydroxyl functionality of from 1.5 to 6 or

a2) mixtures of prepolymers or semiprepolymers containing free isocyanate groups (NCO content 0.5 to 20% by weight) based on (i) any organic polyisocyanates having an (average) molecular weight below 300, except polyisocyanates of the type used for the production of component a1), and (ii) less than equivalent quantities of organic polyhydroxyl compounds having an (average) molecular weight of from 500 to 7000 and an (average) hydroxyl functionality of 1.5 to 6 and containing at least 3% by weight, based on the total weight of component a2), of prepolymers or semiprepolymers of the type mentioned under a1) are reacted with

b) aromatic diamines containing at least one alkyl substituent in the o-position to each amino group at an NCO/$NH_2$ equivalent ratio, based on the isocyanate groups of the pure component a1) or component a1) as presend in component a2) and the amino groups of component b), maintained at 0.5:1 to 50:1, with the proviso that the equivalent ratio of isocyanate groups to amino groups, based on all the isocyanate groups present in component a1) or a2) and the amino groups of component b), is at least 10:1.

2. A process as claimed in claim 1, characterized in that the same or different polyether polyols having an (average) hydroxyl funtionality of 2 to 4 are used as the organic polyhydroxyl compounds for the production of the prepolymers or semiprepolymers.

3. Thixotropic binders containing free isocyanate groups obtainable by the process claimed in claims 1 and 2.

4. The use of the thixotropic binders obtainable by the process claimed in claim 1 and 2 for the production of coating compositions and sealing compounds hardening under the effect of atmospheric moisture.

## Revendications

1. Procédé de préparation de liants contenant des groupes isocyanate libres, séchant à l'air et ayant des propriétés thixotropiques, caractérisé en ce que:

a1) on fait réagir des prépolymères ou semi-prépolymères contenant des groupes isocyanate libres, à une teneur en NCO de 0,5 à 20% en poids, à base de (i) des mélanges de polyisocyanates de la série du diphénylmétane à une teneur en 2,4'-diisocyanatodiphénylméthane d'au moins 20% en poids, et (ii) des composés organiques polyhydroxylés à un poids moléculaire (moyen) de 500 à 7000 et à une fonctionnalité (moyenne) en groupes hydroxy de 1,5 à 6, ou bien

a2) on fait réagir des mélanges de prépolymères ou semi-prépolymères contenant des groupes isocyanate libres, à une teneur en NCO de 0,5 à 20% en poids, à base de (i) des polyisocyanates organiques quelconques de poids moléculaire (moyen) inférieur à 300, à l'exception des polyisocyanates du type mis en œuvre pour la préparation du composant a1), et (ii) un défaut de composés organiques polyhydroxylés de poids moléculaire (moyen) 500 à 7 000 ayant une fonctionnalité (moyenne) en groupes hydroxy de 1,5 à 6 et de au moins 3% en poids, par raport au poids total du composant a2), de prépolymères ou semi-prépolymères du type mentionné ci-dessus sous a1), avec

b) des diamines aromatiques portant au moins un substituant alkyle en position ortho de chaque groupe amino, en maintenant un rapport des équivalents NCO/$NH_2$, relativement aux groupes isocyanate du composant a1) pur ou du composant a1) contenu dans le composant a2), et aux groupes amino du composant b), de 0,5:1 à 50:1, sous réserve que le rapport des équivalents des groupes isocyanate aux groupes amino, relativement à tous les groupes isocyanate présents dans le composant a1) ou a2) et aux groupes amino du composant b), est d'au moins 10:1.

2. Procédé selon la revendication 1, caractérisé en ce que l'on utilise en tant que composés organiques polyhydroxylés pour la préparation des prépolymères ou semi-prépolymères des polyéther-polyols identiques ou différents à une fonctionnalité (moyenne) en groupes hydroxy de 2 à 4.

3. Liants contenant des groupes isocyanate libres et possédant des propriétés thixotropiques, obtenus par un procédé selon les revendications 1 et 2.

4. Utilisation des liants à propriétés thixotropiques obtenus selon les revendications 1 et 2 dans la préparation de produits de revêtement et d'étanchéité durcissant sous l'action de l'humidité de l'air.